# EUROPEAN PATENT SPECIFICATION

(11) **EP 2 328 764 B1**
(45) Date of publication and mention of the grant of the patent: **26.03.2014**
(21) Application number: 09785130.7
(22) Date of filing: 17.09.2009
(51) Int. Cl.: B60D 1/62, B60D 1/64, B60T 13/00, B60T 17/04, B61G 5/06, B61G 5/08, B62D 53/12, F16L 29/00

(54) **BRAKING SYSTEM**
BREMSSYSTEM
SYSTÈME DE FREINAGE

(30) Priority: 19.09.2008 GB 0817153
(43) Date of publication of application: 08.06.2011
(73) Proprietor: Haldex Brake Products Limited, Redditch, Worcestershire B98 9HA (GB)
(72) Inventor: POTTER, Laurence, John, Birmingham B13 9RL (GB); PRESCOTT, Robert, David, West Midlands B91 1DG (GB)
(74) Representative: Lawson, Alison Christina
(86) International application number: PCT/GB2009/002233
(87) International publication number: WO 2010/032016

(56) References cited:
- WO-A1-93/08423
- WO-A1-99/49256
- DE-A1- 4 141 175
- DE-A1- 10 309 297
- DE-A1- 19 723 435
- US-A- 4 626 006
- US-A1- 2008 179 943
- US-B1- 6 312 020

## Description

The present application relates to braking systems, in particular braking systems wherein the brake or brakes are actuated by the supply or release of pressurised fluid, and the source of pressurised fluid is required to be both mechanically and fluidly connected to the or each brake actuator.

For large or heavy vehicles, it is known to provide brake actuators with two brake mechanisms, a service brake for deceleration when a vehicle is in motion, and a spring brake to hold the vehicle stationary. Conventionally, such brake actuators are controlled by the supply and exhaust of compressed air. Examples of couplings used to connect a hose to a brake actuator are disclosed in US 6,312,020, US 4,626,006 and DE 4141175.

In an electronic braking system (EBS), the pressure of the compressed air supplied to the chambers of a brake actuator is controlled by a modulator, which is in fluid communication with the actuator, and comprises one or more electrically operable valves which may be operated to control the supply of compressed air to the brake actuator chambers in accordance with a control signal from an electronic control unit (ECU). In a conventional braking system with anti-lock (ABS) braking, the electrically operable valves in the modulator are only operated to control the braking force applied by the actuator in the event of wheel lock. In both systems, however, the modulator is fixed relative to the actuator, and to the source of pressurised fluid so as to maintain fluid communication as required.

A problem with current methods of fastening the modulator to the brake actuator is that the mechanical fixings are located separately from the fluid supply and release conduits, and from the test points of the modulator. The provision of multiple fixing, fluid communication ports and test points on the modulator wastes space and access to each point may be awkward.

According to a first aspect of the invention there is provided a braking system including a source of pressurised fluid, an actuator, and a fastener for securing the source of pressurised fluid relative to the actuator, the fastener comprising a substantially hollow portion to enable fluid communication between the actuator and the source of pressurised fluid.

The hollow portion may comprise a first longitudinal bore which may extend at least along a portion of a longitudinal axis of the fastener.

The fastener may comprise a mechanical connection means for engaging with the actuator.

The mechanical connection means may comprise a threaded portion which is engageable with a correspondingly threaded inlet port of the actuator.

The fastener may comprise a generally cylindrical stem having a first end and a second end. In this case the fastener may be a bolt comprising a head located at the first end of the stem. Alternatively, the fastener may comprise a nut which is mounted on the first end of the stem.

The threaded portion may be located at the second end, on an external surface of the stem.

The stem of the fastener may be receivable in a generally cylindrical sleeve, and may be arranged such that the sleeve is clamped between the nut or head of the fastener and the actuator, when the threaded portion is engaged with the actuator.

The longitudinal bore may extend from the second end of the fastener along at least a part of the longitudinal axis of the fastener, such that fluid is permitted to flow between the hollow of the fastener and the actuator port.

The fastener may comprise at least one collar which supports an o-ring which is engageable with an interior surface of the sleeve.

The outer surface of the stem and the inner surface of the sleeve may form at least one substantially annular space.

The fastener may comprise at least one lateral bore which is fluidly communicable with the first longitudinal bore and with the annular space, hence permitting fluid to flow between the annular space and the port of the actuator.

The fastener may be engageable with the actuator of a spring brake, and enable fluid communication between the source of pressurised fluid and the spring brake actuator, through the longitudinal bore of the fastener.

The fastener may be engageable with the actuator of a service brake, and enable fluid communication between the source of pressurised fluid and the service brake actuator.

The sleeve may form part of a modulator.

The fastener may comprise a means of separation of two or more fluid flows through the fastener.

The means of separation may be operable to separate flows of fluid having differing pressures.

The means of separation may comprise a second longitudinal bore which extends along a further portion of the longitudinal axis of the fastener, substantially axially aligned with the first longitudinal bore.

The fastener may comprise a second lateral bore which is fluidly communicable with the second longitudinal bore.

The means of separation may comprise a radially outwardly extending collar for supporting an o-ring which is engageable with the internal wall of the sleeve, to separate the annular space into at least two annular spaces.

The first lateral bore, and the first longitudinal bore, may be fluidly communicable with a first annular space; and the second lateral bore, and the second longitudinal bore may be fluidly communicable with the second annular space.

The fastener may comprise a test point for receiving test equipment to test the pressure of the fluid in the braking system.

The test point may comprise an internally threaded bore in the head of the fastener.

The fastener may secure a modulator to the actuator.

According to a second aspect of the invention, there is provided a fastener for connecting an actuator to a source of pressurised fluid in a braking system, the fastener comprising a substantially hollow portion for permitting the flow of fluid through the fastener, to enable fluid communication between the source of pressurised fluid and the actuator of the braking system.

The invention will now be described, with reference to the accompanying drawings, of which:
FIGURE 1A is a perspective view of a first embodiment of fastener for use in a braking system according to the present invention,
FIGURE 1B is a longitudinal cross-section of the first embodiment of fastener,
FIGURE 2 is a cross sectional view of a part of the braking system according to the present invention, showing the first embodiment of fastener in use, in connection with a modulator and a brake actuator,
FIGURE 3A is a perspective view of a second embodiment of fastener for use in a braking system according to the present invention,
FIGURE 3B is a longitudinal cross-sectional view of the second embodiment of fastener,
FIGURE 4A is a perspective view of a third embodiment of fastener for use in a braking system according to the present invention,
FIGURE 4B is a cross-sectional view of the third embodiment of fastener,
FIGURE 5 is a cross-sectional view of a part of an EBS braking system in accordance with the present invention, showing the second and third embodiments of fastener in use, in connection with a modulator and a brake actuator,
FIGURE 6A is a perspective view of a fourth embodiment of fastener for use in a braking system according to the present invention,
FIGURE 6B is a cross-sectional view of the fourth embodiment of fastener,
FIGURE 7 is a cross-sectional view of a part of an EBS braking system according to the present invention, showing the third and fourth embodiments of fastener in use, in connection with a modulator and a brake actuator,
FIGURE 8 is a cross-sectional view of a part of an ABS braking system according to the present invention, showing the second and fourth embodiments of fastener in use, in connection with a modulator and a brake actuator,
FIGURES 9A and 9B show a perspective view of an alternative embodiment of modulator for use in a braking system according to the present invention, and
FIGURES 10A and 10B show a perspective view of a further alternative embodiment of modulator for use in a braking system according to the present invention.
FIGURE 11 shows an alternative configuration of fastener to that illustrated in Figure 4B.

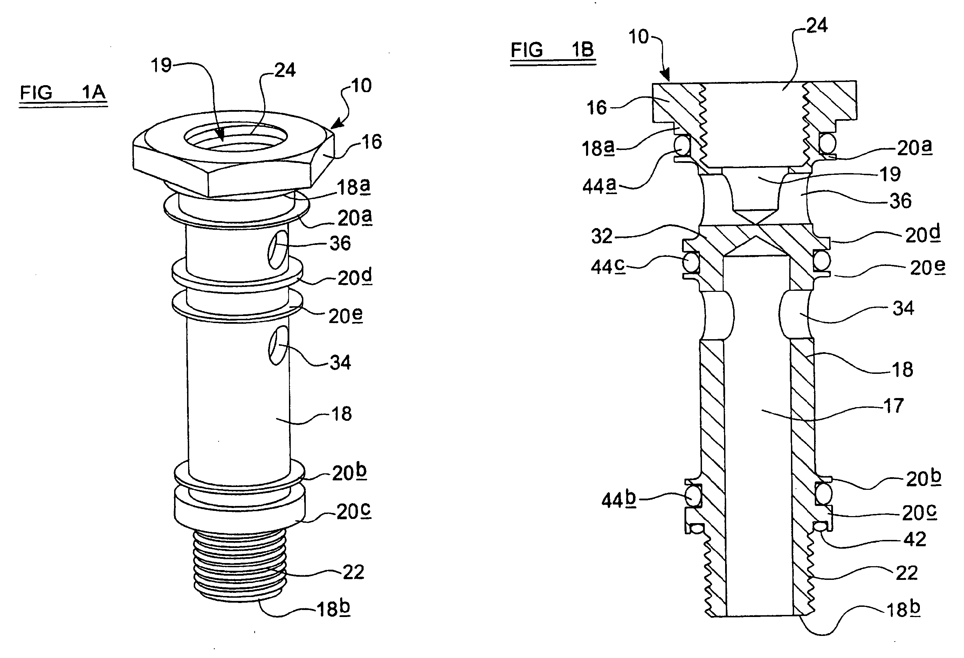

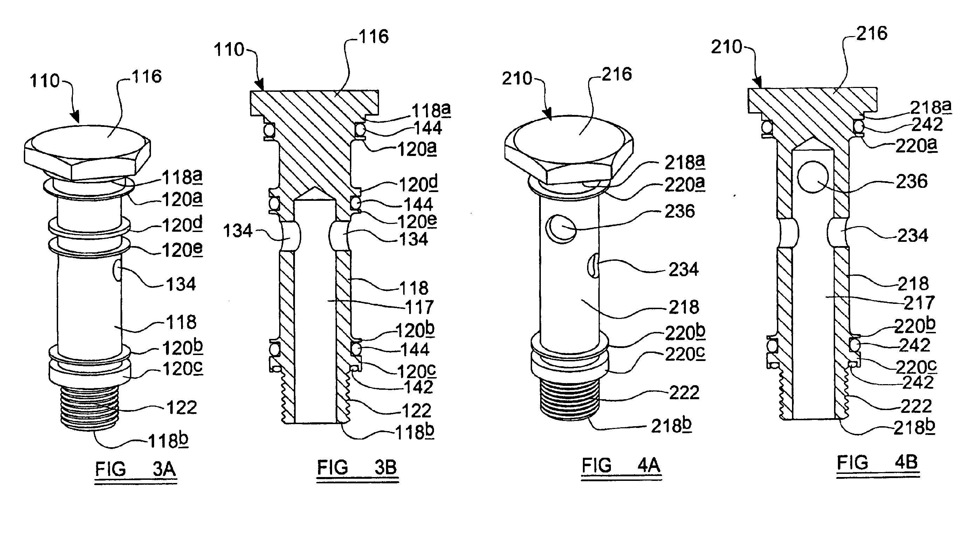

Referring to figures 1A, 1B, 3A, 3B, 4A, 4B, 6A and 6B there are shown a number of embodiments of a fastener shown generally at 10, 110, 210 and 310, for connecting a source of pressurised fluid in a braking system to a brake actuator of the braking system. Equivalent features comprised by each of the fasteners 10, 110, 210, 310 are referenced by the same two digit reference numeral, which either stands alone, as in the case of the first embodiment of the fastener 10 shown in figures 1A and 1B, or is preceded by a third digit which denotes the particular embodiment of the fastener, as shown in figures 3A, 3B, 4A, 4B, 6A and 6B.

The fasteners 10, 110, 210, 310 each comprise a bolt having a head 16, 116, 216, 316, and a stem 18, 118, 218, 318, respectively. The stem 18, 118, 218, 318, is substantially cylindrical and has a first end 18a, 118a, 218a, 318a, and a second end 18b, 118b, 218b, 318b. The head 16, 116, 216, 316, is located at the first end 18a, 118a, 218a, 318a, of the stem 18, 118, 218, 318, and is substantially hexagonal, such that its faces are engageable by a tool for rotating the bolt 10, 110, 210, 310.

The stem 18, 118, 218, 318 is provided with a bore 17, 117, 217, 317, which in the present example has a substantially circular cross-section, and which extends from its second end 18b, 118b, 218b, 318b, at least part of the way along the longitudinal axis of the bolt 10, 110, 210, 310 such that the stem 18, 118, 218, 318, is substantially hollow. The bolt 10, 110, 210, 310, has an externally threaded portion 22, 122, 222, 322, at the second end 18b, 118b, 218b, 318b, of the stem 18, 118, 218, 318.

The stem 18, 118, 218, 318 also includes a first collar 20a, 120a, 220a, 320a, 420a, a second collar 20b, 120b, 220b, 320b, and a third collar 20c, 120c, 220c, 320c, which extend radially outwardly of the external surface of the stem 18, 118, 218, 318 respectively. The first collar 20a, 120a, 220a, 320a, is located adjacent, but spaced from, the head 16, 116, 216, 316, the second collar 20b; 120b, 220b, 320a, and the third collar 20c, 120c, 220c, 320c, are located, spaced from one another, adjacent the threaded portion at the second end 18b, 118b, 218b, 318b, of the stem 18, 118, 218, 318.

It is possible for the bolt 10, 110, 210, 310, to both mechanically and fluidly connect the source of pressurised fluid in the braking system to a brake actuator, by permitting fluid to flow through the interior of the bolt 10, 110, 210, 310. In addition to the common features of the bolts 10, 110, 210, 310, described above, each embodiment of fastener has a number of further features which will now be described in detail.

Figures 1A and 1B show an embodiment of a fastener which is particularly suitable for use in connecting the supply of compressed air to the actuator of a service brake in an electronic braking system (EBS). The stem 18 of the bolt 10 shown in figures 1A and 1B comprises a generally circular cross-section second bore 19, which is substantially aligned with the bore 17 in the second end 18b, and which extends from the first end 18a of the bolt 10 along a portion of the longitudinal axis of the bolt 10 and through the head 16. The second bore 19 comprises an internal threaded portion 24 which extends through the head 16 and along a portion of the internal wall of the stem 18.

The first and second longitudinal bores 17, 19 are separated by a first solid portion 32 of the stem 18. Thus it is not possible for fluids to travel directly along the entire length bolt 10, for example to flow into the bolt 10 via the bore 19 in the head, and exit through the bore 17 in the second end 18b of the stem 18. The first longitudinal bore 17 is fluidly communicable with a first lateral bore 34 which extends substantially diametrically across a generally central portion of the stem 18, permitting fluids to travel through the lateral passage 34, from an aperture one side of the stem 18 to the other. The fastener 10 also comprises a second lateral bore 36, which extends diametrically across the stem 18 substantially parallel to, the first lateral passage 34. The second lateral bore 36 is fluidly communicable with the second longitudinal bore 19, and fluids entering the bolt 10 through the upper bore 19 are able to flow out of the second lateral bore 36.

The bolt 10 comprises two additional collars 20d and e, which are located between the first 34 and second 36 lateral bores, and which extend radially outwardly from the stem 18.

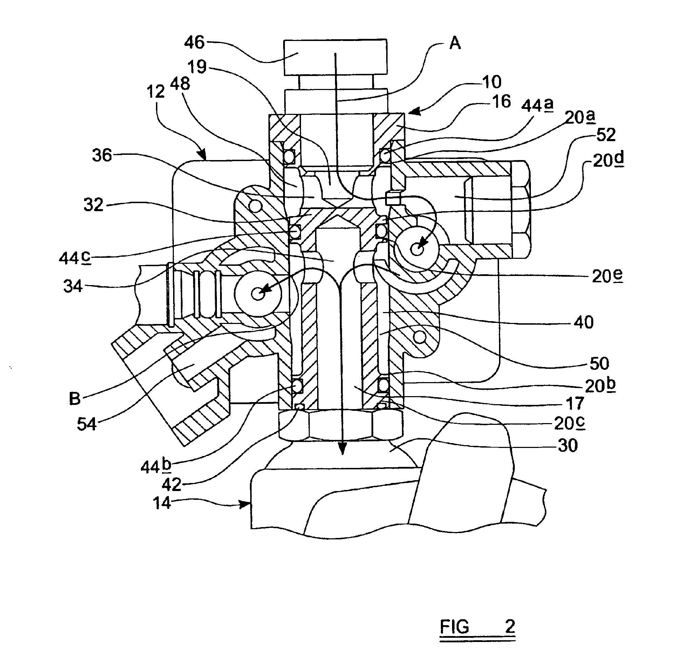

In use, the bolt 10 attaches a modulator 12 to an actuator 14 of a vehicle braking system as illustrated in Figure 2. The modulator 12 is conventional, and contains electrically operable valves which control the flow of fluid in accordance with electrical signals supplied by an electronic control unit and based on driver braking demand. The stem 18 of the bolt 10 is inserted into a generally cylindrical sleeve in the modulator housing, and the externally threaded portion 22 is inserted into a correspondingly internally threaded port 30 in the actuator 14, the threaded connection between the bolt 10 and tightened until the third collar 20c engages with the exterior surface of the actuator 14. This metal-to-metal contact between the collar 20c and the actuator 14 means that if the modulator 12 is made from a plastic material which is compressed as the bolt 10 is tightened, and if the plastic relaxes or creeps over time, the integrity of the seal between the modulator 12 and actuator 14 is retained, as it can be assumed that the metal of the bolt 10 does not creep to any appreciable extent. The modulator 12 is thus held between the head 16 of the fastener and the actuator 14, such that relative movement between the modulator 12 and the actuator is minimised or completely prevented. The mechanical connection between the third collar 20c and the actuator 14 is pneumatically sealed by a first O-ring 42 which is seated beneath the third collar 20c, such that it engages with a surface of the actuator 14 around the port 30.

The connection between the stem 18 of the bolt 10 and the internal wall of the sleeve 40 is sealed by, in the example shown in figure 2, the three further o-rings 44a, 44b, 44c which are supported by the collars 20a to e around the exterior of the stem 18. The second O-ring 44a is located between the first collar 20a and the head 16 of the bolt 10, the third O-ring 44b is located between the second 20b and third 20c collars and the fourth O-ring 44c is located between the fourth 20d and fifth 20e collars. The outer diameter of the stem 18 is smaller than the diameter of the sleeve 40, however the diameters of the collars 20a-e are similar to the internal diameter of the sleeve 40, so that the O-rings 44a, 44b, 44c confined between adjacent collars 20, are in sealing engagement with the sleeve 40 and divide the sleeve 40 into two annular spaces 48, 50. The second lateral bore 36 is fluidly communicable with the first annular space 48 in the sleeve 40 of the modulator 12, and the first lateral bore 34 is fluidly communicable with the second annular space 50 of the modulator 12.

Pressurised fluid in the form of compressed air is received from a reservoir (not shown) via a threaded fitting 46 which is engageable with the internal threaded portion 24 of the bolt 10. When the service brake is to be actuated, compressed air is supplied via the fitting 46, enters the bolt 10 through the second longitudinal bore 19 in the first end of the stem 18, as shown by arrow A. The air is unable to travel directly through the bolt 10, and instead enters the second lateral bore 36 of the stem 18. The air then leaves the bolt 10, and enters the first substantially annular space 48 of the modulator. The first annular space 48 is communicable with a chamber 52 of the modulator. The chamber 52 is selectively fluidly communicable with the second annular space 50 of the modulator. The flow of compressed air between the chamber 52 and the second annular space 50 is controlled by a diaphragm (not shown), and the electrically operable valves in the modulator 12 control the flow of fluid from chamber 52 to the second annular space 50 in accordance with an electrical signal based on driver braking demand.

To actuate the service brake, the modulator valves are actuated so that air is permitted to enter the second annular space 50 from the chamber 52, and from there, enter the first lateral bore 34 of the bolt. The compressed air travels along the first longitudinal bore 17 of the stem 18, and enters the port 30 of the actuator 14, whereby it actuates the brake in a conventional manner.

When the service brake is to be released, the compressed air which has been supplied to the actuator via the port 30, is exhausted via an electrically operable valve in the modulator 12 which is operated to connect an exhaust port 54 which is open to the atmosphere to the second annular space 50. The compressed air to be exhausted enters the modulator 12 from the port 30, via the first longitudinal bore 17 of the fastener 10, from there entering the first lateral bore 34, and then the second annular space 50 of the modulator 12, as shown by arrow B.

Therefore, it will be appreciated that in addition to fastening the modulator 12 to the actuator 14, the bolt 10 enables pressurised fluid to be introduced to and exhausted from the actuator 14, and is able to create separation of airflows at different pressures within the bolt 10. The fastener 10 may also provide strain relief when the modulator and/or the actuator ports comprise parts manufactured from plastics materials, and as the connection involves metal-to-metal engagement of the third collar 20c with the housing of the actuator 14, ensures that the integrity of the connection between the compressed air reservoir and the actuator is retained even if the plastic material of the modulator deforms or relaxes over time.

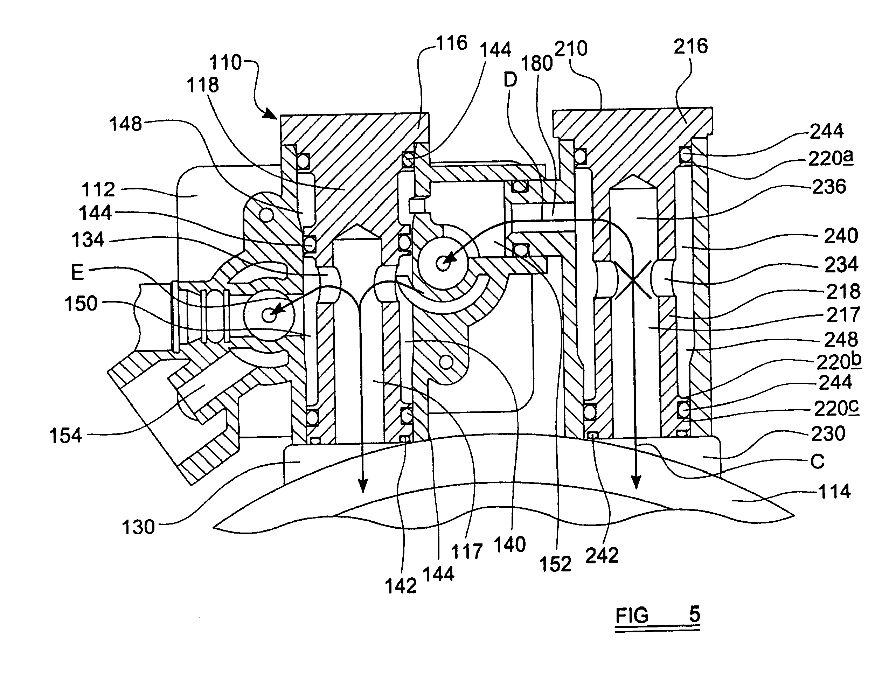

A second embodiment of a fastener is shown in figures 3A and 3B, and is shown in use in figure 5. The bolt 110 is intended for use in connecting a modulator 112 to an actuator 114 which comprises a spring brake actuator and a service brake actuator. The bolt 110 does not comprise a second bore and the head 116 of the bolt 110 is therefore solid.

The stem 118 comprises a single longitudinal bore 117 which extends from the second end 118a of the stem 118, along at least a part of the longitudinal axis of the bolt 110. The bolt 110 also comprises a single lateral bore 134, which is fluidly communicable with, and substantially perpendicular to, the longitudinal bore 117. Furthermore, like the first embodiment of fastener 10, the bolt 110 comprises five radially outwardly extending collars 120a-e. The lateral bore 134 is located between the second and fifth collars 120b and 120e.

A third embodiment of a fastener according to the present invention is shown generally at 210 in figures 4A and 4B.

The stem 218 of this fastener is provided with two lateral bores 234 and 236 which lie along generally parallel planes, and which in this example are substantially perpendicular to one another. It will be apparent that the lateral bores 234 and 236 may extend across the stem 218 of the bolt 210 in any direction as required, and need not necessarily be perpendicular to one another. The lateral bores 234 and 236 are positioned within the stem 218 between the first and second collars 220a and 220b, and therefore provide fluid flow to the same volume as each other. Whilst this function could be provided with only one lateral bore, it is difficult to make one lateral bore sufficiently large to provide the required flow rate whilst maintaining the mechanical integrity of the bolt 210. As such, in this example, two lateral bores 234, 236 are provided.

When in use, as shown in figure 5, the bolts 110 and 210 fasten the modulator 112 to the actuator 114 of an EBS. I n this example, the actuator 114 includes a spring brake actuator and a service brake actuator. As with the first embodiment of fastener, the bolts 110 and 210 are receivable in a first sleeve 140 and second sleeve 240 of the modulator 112 and are engaged with a threaded service brake port 130 and a threaded spring brake port 230 respectively. The bolts 110 and 120 are tightened so that the collars 120c and 220c engage with the exterior surface of the actuator 114, the collars 120c and 220c supporting first O-rings 142 and 242 against the service brake port 130 and the spring brake port 230 respectively, to pneumatically seal the connection of the modulator 112 to the actuator 114. The modulator 112 is therefore clamped between the actuator 114 and the heads 116, 216 of the bolts 110, 210.

Further O-rings are provided between the first collar 120a, 220a and the head 116, 216 and between the second 120b, 220b and third 120c, 220c collars of each bolt 110, 210, and between the fourth and fifth 120d, 120e collar of the second embodiment of bolt 110, the collars and O-rings engaging with the interior surface of the sleeve 140 to provide a seal between the bolt 110 and the modulator 112. Thus, the first sleeve 140 of the modulator 112 is divided into two substantially annular spaces 148 and 150, the lateral bore 134 of the bolt 110 being fluidly communicable with the second annular space 150. Moreover, the lateral bores 234 and 236 are fluidly communicable with an annular space 248 in the second sleeve 240 around the stem 218 of the bolt 210 between the O-rings 244.

As in the embodiment illustrated in Figure 2, the first annular space 148 in the first sleeve 140 is connected to a first chamber 152 in the modulator 112, the first chamber 152 being separable from the second annular space 150 by means of a first electrically operable valve. The second annular space 150 is also connectable to an exhaust port 154 via a second electrically operable valve. In this embodiment, however, the first chamber 152 of the modulator 112 is connected to the second sleeve 240 via a passage 180 so that fluid may freely pass from the annular space 248 in the second sleeve 240 to the first chamber 152 of the modulator 112.

Pressurised air is supplied to the system from a reservoir (not shown) via a bore in the modulator housing which extends into the second sleeve 240 and to the lateral bore 234 in the bolt 210. From there the pressurised air is supplied to the spring brake actuator via the longitudinal bore 217 of the bolt 210, through the port 230 in the actuator 114, in the direction of the arrow C, to release the spring brake in a conventional manner.

The pressurised air is also able to enter the conduit 180 via the lateral passage 236, and hence to enter a chamber 152 of the modulator 112, from the conduit 180, as shown by arrow D. When the service brake is required to be applied, the first electrically operable valve is operated to allow pressurised air pass from the chamber 152 to the second annular space 150 of the modulator 112, and then to the service brake port 130 via the lateral bore 234 and the longitudinal bore 117 of the bolt 110. Thus pressurised air enters the service brake chamber to apply the service brake in a conventional manner.

Releasing the service brake requires air to be exhausted from the service brake actuator, and this air is vented to the atmosphere from the service brake actuator via the longitudinal bore 117 of the bolt, and the lateral bore 134, and through an exhaust valve 154 of the modulator in the direction of arrow E. This is achieved by closing the first electrically operable valve to prevent air from the second sleeve 240 venting to atmosphere, and opening the second electrically operable valve to connect the second annular space 150 to the exhaust port 54.

When the spring brake is required to be applied, pressurised air is exhausted from the port 230 of the spring brake actuator, by opening both electrically operable valves so that air in the spring brake chamber can pass to the chamber 152 in the modulator 112 via the longitudinal 217 and lateral bores 234, 236 in the third embodiment of bolt 210 and the passage 180, and then to the exhaust port 154 via the second annular space 150.

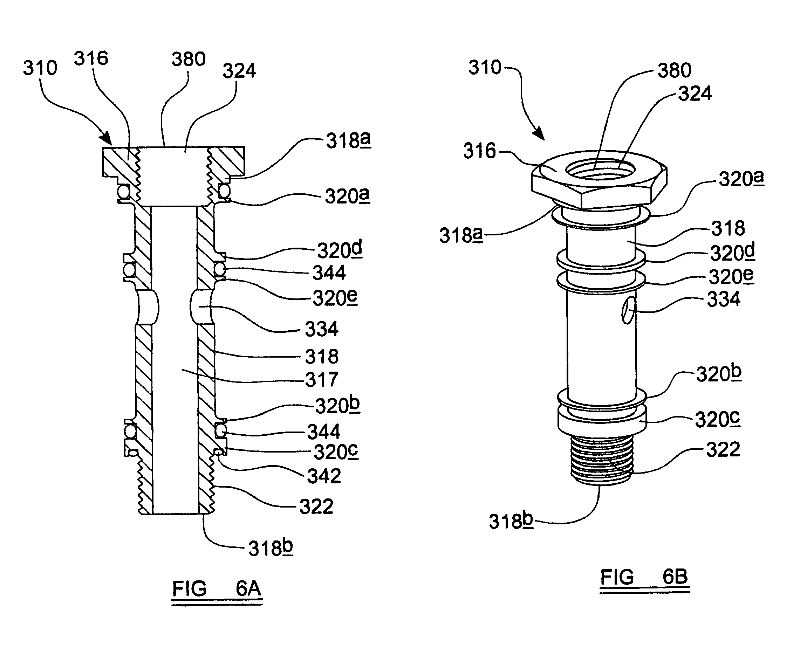

A fourth embodiment of a fastener suitable for use in the present invention, as shown in figures 6A and 6B, shares many of the features of the second embodiment shown in figure 3A and 3B. The bolt 310 is provided for connection of the modulator 312 to the actuator 314 and enables the supply of pressurised air to the spring brake actuator. The bolt 310 has a single longitudinal bore 317 which extends along the whole length of the bolt 310, from the second end 318b to the first end 318a of the stem 318, and through the head 316. The bolt 310 comprises a single lateral bore 334, and five collars 320a-e. The bolt 310 also comprises a test point position 380 in the head 316 which is communicable with the longitudinal bore 317, and includes an internally threaded portion 324, with which test apparatus can be engaged, to test the pressure of the air in the braking system.

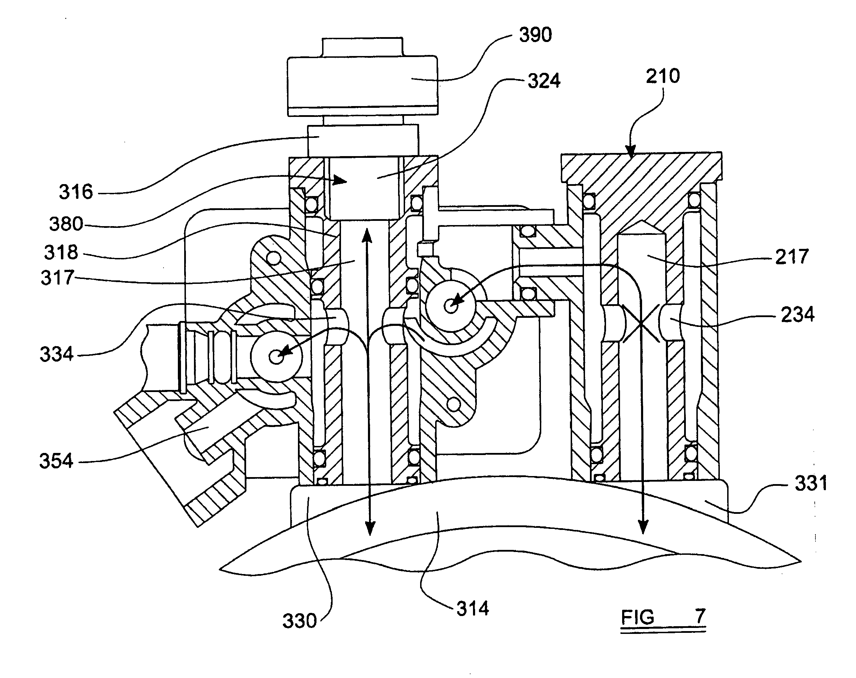

In use, as shown in Figure 7, the bolt 310 is threadedly engageable with the service brake port 330 of an actuator 314 of an EBS. Its function is similar to that of bolt 110, except that pressurised air is able to flow directly through the bolt 310, from the second end 318b of the stem, which is threadedly engaged with the service brake port, to the first end 318a, and through the test point 380, with which test equipment 390 is threadedly engageable. This enables a direct measurement of the air pressure in the service brake chamber to be taken.

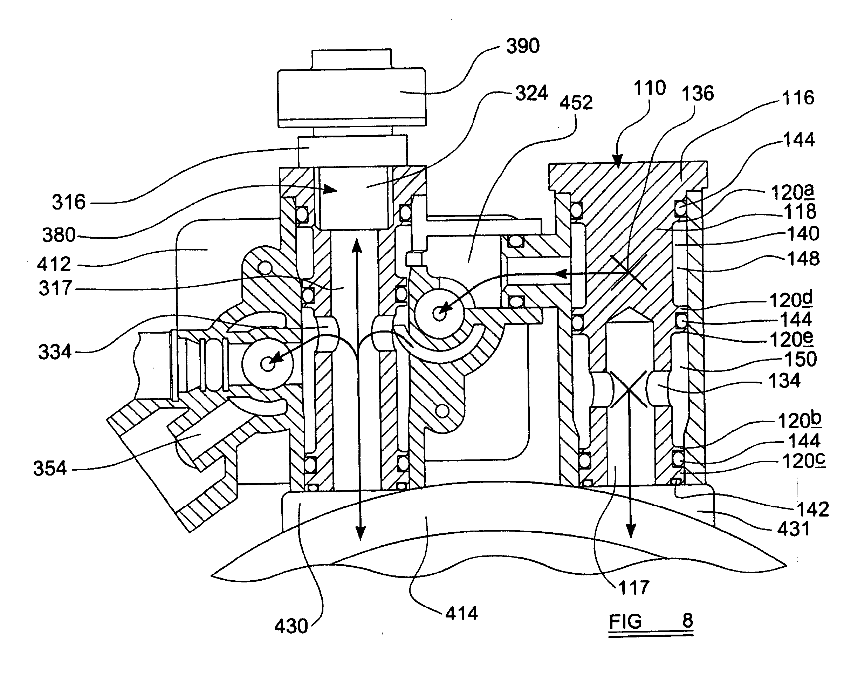

The second and fourth embodiments of bolt 110, 310 may also be used to connect a spring and service brake actuator of a braking system to a modulator and a pressurised air supply (not shown) in an anti-lock braking system (ABS), as illustrated in Figure 8. The fourth embodiment of bolt 310 is connected to the modulator and to the service brake port 430 in exactly the same way as in the system illustrated in Figure 7. It will be appreciated that this could be replaced by the second embodiment of bolt 110 if no test point is required.

The second bolt 110 is secured to the service brake port 431 and mounted in a second sleeve of the modulator. The first annular space 148 is in communication with the first chamber 452 in the modulator via passage 480, and is sealed from the second annular space 150, and from the longitudinal bore 117 in the bolt 110 by the O-ring held between the fourth 120d and fifth 120e collars. Fluid pressure generated as a result of driver demand is delivered to the first annular space 148 via a first port in the sleeve (not shown). Under normal conditions the valves in the modulator are operated such that the first chamber is connected to the second annular space 350 around the fourth embodiment of bolt 310, and the exhaust port is sealed from the second annular space 350. Thus, any fluid pressure arriving at the modulator as a result of driver braking demand passes to the service brake chamber to apply the service brake. If wheel-lock is detected, the valves are operated to hold (by closing the connections between the second annular space 350 and the first chamber 452 and the exhaust port) or release the braking pressure (by closing the connection between the second annular space 350 and the first chamber 452 and opening the connection between the second annular space 350 and the exhaust port) as is conventional. The ABS system thus is operable to prevent the wheels of the vehicle from locking, by selectively holding the pressurised air in the service brake actuator at a stable level or venting a proportion of the pressurised air to the atmosphere to release the service brake momentarily to prevent wheel, lock, before allowing pressure to build again.

A second port is provided in the sleeve, the second port connecting a pressurised air reservoir to the second annular space 150. The spring brake chamber is thus connected to the pressurised air reservoir via the lateral 134 and longitudinal 117 bore in the bolt 110, so as to release the spring brake.

The arrangement illustrated in Figure 8 can also be used in an EBS system. In this case, the air for operating the spring brake comes into the second annular space 50 from a separate reservoir to the air for operating the service brake. The first port in the sleeve is therefore connected to the service brake reservoir, and supply to the service brake chamber of the actuator 14 regulated using the valves of the modulator 12, whilst the second port in the sleeve is connected to the spring brake reservoir.

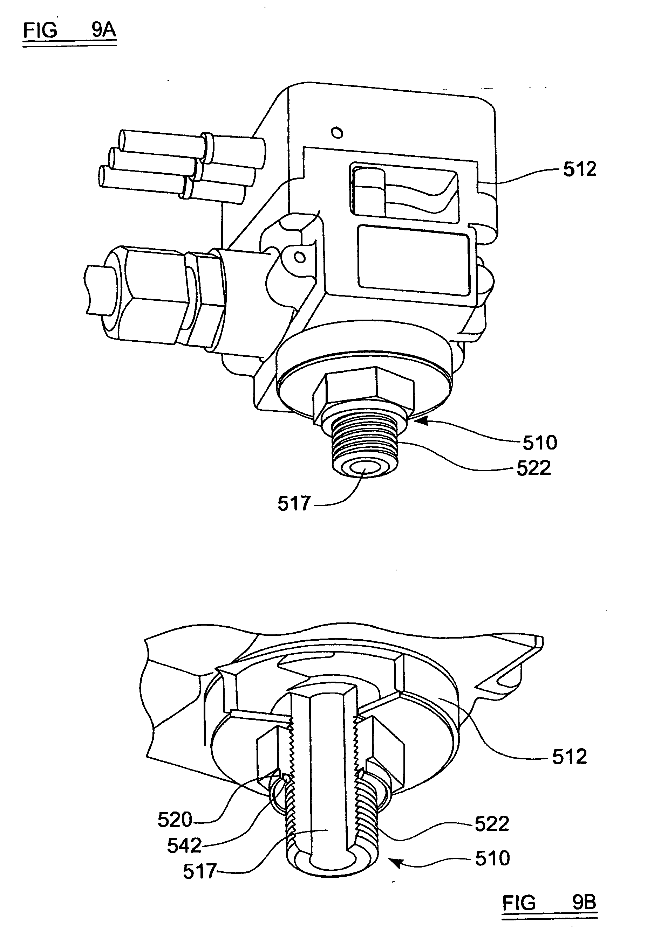

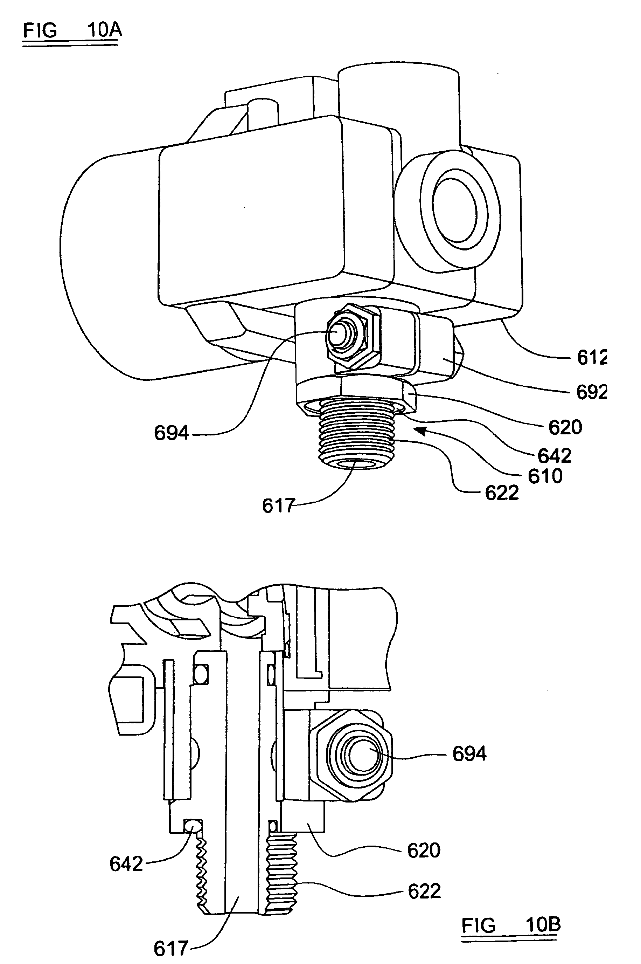

Further embodiments of fasteners according to the present invention are shown in Figures 9A, 9B, 10A and 10B.

The fasteners 510, 610 shown in Figures 9A, 9B, 10A and 10B each comprise a substantially cylindrical external threaded portion 522, 622 which extends outwardly of a modulator 512, 612 which is suitable for use in a vehicle braking system. The threaded portion 522, 622 comprises a bore 517, 617 which extends along the longitudinal axis of the threaded portion 522, 622, and which is fluidly communicable with the interior of the modulator 512, 612. In use, the threaded portion 522, 622 is threadedly engaged with a correspondingly internally threaded port of an actuator (not shown) to permit pressurised air to flow between the modulator 512, 612 and the actuator, in addition to mechanically fixing the position of the modulator 512, 612 relative to the actuator. The fastener 512, 612 comprises at least one locknut 520, 620 which supports an o-ring 542, 642, which is compressed between the modulator 512, 612 and the actuator to seal the connection therebetween. The locknuts 520, 620 also serve to set the angular orientation between the modulator 512, 612 and the actuator.

The fastener 610 comprises an internally holed portion 692 which extends tangentially to the cylindrical portion 622, through which a bolt 694 may be passed. Nuts are placed on either end of the bolt 694 and tightened to tighten the connection between the modulator 612 and the actuator and to prevent relative angular movement between the two.

Pressurised air is permitted to flow along the bore 517, 617 of the fasteners 510, 610 between the modulator 512 and the respective actuator.

It should be appreciated that the fasteners 10, 110, 210, 310 need not be configured exactly as illustrated and described above. For example, the bolts 10, 110, 210, 310 could be replaced with headless, threaded studs, the head of the bolt being replaced with a nut threaded onto the stud. Alternatively, instead of using a nut, the fitting 46 by means of which the first embodiment of fastener 10 is connected to the pressurised fluid reservoir is provided with an internally threaded portion which engages with the external thread of the stud, the modulator 12 thus being clamped between the fitting 46 and the actuator 14.

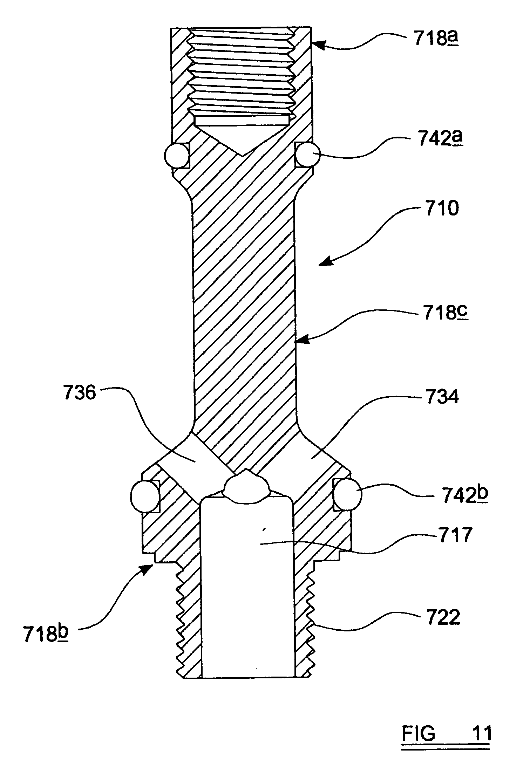

An alternative configuration of the fastener 210 shown in Figure 4B is, for example, illustrated in Figure 11. This fastener 710 has a stem 718 with a first end 718a and a second end 718b and a substantially solid cylindrical central portion 718c which has a smaller diameter than the first end 718a and second end 718b. The first end 718a is provided with a circumferential groove in which is located a first O-ring 742, and a threaded cylindrical bore which extends axially into the first end 718a of the fastener 710. The second end 718b includes an enlarged portion which has a significantly larger diameter than the first end 718a, and an externally threaded portion which has the same outer diameter as the first end 718a. The enlarged portion lies between the central portion 718c and the externally threaded portion, and is provided with a circumferential groove in which is provided a second O-ring 742b.

A generally cylindrical main bore 717 extends axially into the second end 718b of the fastener 710, ending within the enlarged portion. Two further cylindrical bores 734, 736 extend from the main bore 717 to the exterior of the fastener 710 at a tapered surface which provides the transition between the small diameter of the central portion 718c and the large diameter of the enlarged portion. These bores 717 and 734 or 736 therefore provide a path for fluid flow between the second end 718b of the fastener 710 and the volume around the central portion 718c of the stem between the two O-rings 742a, 742b. It should therefore be appreciated that this embodiment of fastener 710 can be used in place of the third embodiment of fastener 210, for example as illustrated in Figure 5. Of course, as this alternative embodiment of fastener 710 is not provided with a head, it is necessary to screw a bolt with a head into the threaded bore at the first end 718a of the stem 718 to secure the modulator 112 to the actuator 114. This could be done before or after the fastener 710 is inserted into the sleeve of the modulator housing.

Configuring the fastener 710 in such a way that at least a substantial portion of the stem 718 is solid can be advantageous as the resulting weight distribution within the fastener 710 can reduce the likelihood of vibrations, for example caused by motion of a vehicle over a rough surface, causing the fastener to come loose during use.

In this example, to achieve the desired fluid flow rate through the fastener 710, two side bores 734, 736 are preferable. It should be appreciated that one side bore or more than two side bores could be provided to achieve the desired flow capacity and fastener strength.

When used in this specification and claims, the terms "comprises" and "comprising" and variations thereof mean that the specified features, steps or integers are included. The terms are not to be interpreted to exclude the presence of other features, steps or components.

## Claims

1. A braking system including a source of pressurised fluid, an actuator (14, 114, 314, 414), and a fastener (10, 110, 210, 310, 510, 610, 710) for securing the source of pressurised fluid relative to the actuator, the fastener (10, 110, 210, 310, 510, 610, 710) comprising a substantially hollow portion to enable fluid communication between the actuator (14, 114, 314, 414) and the source of pressurised fluid, **characterised in that** the source of pressurised fluid is a modulator (12, 112, 312, 412, 512, 612).

2. A braking system according to claim 1 wherein the hollow portion comprises a first longitudinal bore (17, 117, 217, 317, 517, 617, 717) which extends at least along a portion of a longitudinal axis of the fastener (10, 110, 210, 310, 510, 610, 710).

3. A braking system according to claim 1 or claim 2 wherein the fastener (10, 110, 210, 310, 510, 610, 710) comprises a mechanical connection means for engaging with the actuator (14, 114, 314, 414), the mechanical connection means comprising a threaded portion (22, 122, 222, 322, 522, 622) which is engageable with a correspondingly threaded inlet port of the actuator (14, 114, 314, 414).

4. A braking system according to claim 3 wherein the fastener (10, 110, 210, 310, 510, 610, 710) comprises a generally cylindrical stem (18, 118, 218, 318, 718) having a first end (18a, 118a, 218a, 318a, 718a) and a second end (18b, 118b, 218b, 318b, 718b).

5. A braking system according to claim 4 wherein the fastener (10, 110, 210, 310, 510, 610, 710) is a bolt comprising a head (16, 116, 216, 316) located at the first end of the stem, or comprises a nut which is mounted on the first end (18a, 118a, 218a, 318a, 718a) of the stem (18, 118, 218, 318, 718).

6. A braking system according to claim 4 wherein the threaded portion (22, 122, 222, 322, 522, 622) is located at the second end (18b, 118b, 218b, 318b, 718b), on an external surface of the stem (18, 118, 218, 318, 718).

7. A braking system according to claim 4 wherein the stem (18, 118, 218, 318, 718) of the fastener (10, 110, 210, 310, 510, 610, 710) is receivable in a generally cylindrical sleeve (40, 140, 240), and the sleeve (40, 140, 240) is clamped between the nut or the head (16, 116, 216, 316) of the fastener (10, 110, 210, 310, 510, 610, 710) and the actuator (14, 114, 314, 414), when the threaded portion (22, 122, 222, 322, 522, 622) is engaged with the actuator (14, 114, 314, 414).

8. A braking system according to any one of claims 4 to 7 where dependent on claim 2 wherein the longitudinal bore (17, 117, 217, 317, 517, 617, 717) extends from the second end (18b, 118b, 218b, 318b, 718b) of the fastener (10, 110, 210, 310, 510, 610, 710) along at least a part of the longitudinal axis of the fastener (10, 110, 210, 310, 510, 610, 710), such that fluid is permitted to flow between the hollow of the fastener (10, 110, 210, 310, 510, 610, 710) and the actuator port (30, 130, 230, 330, 331, 430, 431).

9. A braking system according to claim 7 or 8 wherein the fastener (10, 110, 210, 310, 510, 610, 710) comprises at least one collar (20a, 120a, 220a, 320a, 420a, 20b, 120b, 220b, 320b, 20c, 120c, 220c, 320c) which supports an o-ring (44a, 44b, 44c) which is engageable with an interior surface of the sleeve (40, 140, 240) and the outer surface of the stem (18, 118, 218, 318, 718) and the inner surface of the sleeve (40, 140, 240) form at least one substantially annular space (48, 50, 148, 150, 240).

10. A braking system according to claim 9, where dependent on claim 5, wherein the fastener (10, 110, 210, 310, 510, 610, 710) comprises at least one lateral bore (34, 36, 234, 236, 334) which is fluidly communicable with the first longitudinal bore (17, 117, 217, 317, 517, 617, 717) and with the annular space (48, 50, 148, 150, 240), hence permitting fluid to flow between the annular space (48, 50, 148, 150, 240) and the port (30, 130, 230, 330, 331, 430, 431) of the actuator (14, 114, 314, 414).

11. A braking system according to any of the preceding claims, the braking system having first and second fasteners wherein the first fastener (210) is engaged with the actuator of a spring brake, and enables fluid communication between the source of pressurised fluid and the spring brake actuator, through the longitudinal bore (217) of the fastener (210), and the second fastener (110, 310) is engaged with the actuator of a service brake, and enables fluid communication between the source of pressurised fluid and the service brake actuator.

12. A braking system according to any one of the preceding claims wherein the fastener (10, 110, 310) comprises a means of separation of two or more fluid flows through the fastener, the flows of fluid having differing pressures.

13. A braking system according to claim 12 wherein the means of separation comprises a second longitudinal bore (19) which extends along a further portion of the longitudinal axis of the fastener (10), substantially axially aligned with the first longitudinal bore (17).

14. A braking system according to claim 12 wherein the fastener (10) comprises a second lateral bore (36) which is fluidly communicable with the second longitudinal bore (119), and the means of separation comprises a radially outwardly extending collar (20d, 20e) for supporting an o-ring (44c) which is engageable with the internal wall of the sleeve (40), to separate the annular space into at least two annular spaces (48, 50).

15. A braking system according to claim 14 wherein the first lateral bore (34), and hence the first longitudinal bore (17), is fluidly communicable with a first annular space (48), and the second lateral bore (36), and hence the second longitudinal bore (19) is fluidly communicable with the second annular space (50).

## Patentansprüche

1. Bremssystem einschließlich einer Druckflüssigkeitsquelle, eines Aktors (14, 114, 314, 414) und eines Befestigungselements (10, 110, 210, 310, 510, 610, 710) zur Sicherung der Druckflüssigkeitsquelle relativ zum Aktor, wobei das Befestigungselement (10, 110, 210, 310, 510, 610, 710) einen im Wesentlichen hohlen Abschnitt umfasst, um die Flüssigkeitsübertragung zwischen dem Aktor (14, 114, 314, 414) und der Druckflüssigkeitsquelle zu ermöglichen, **dadurch gekennzeichnet, dass** die Druckflüssigkeitsquelle ein Modulator (12, 112, 312, 412, 512, 612) ist.

2. Bremssystem nach Anspruch 1, wobei der hohle Abschnitt eine erste Längsbohrung (17, 117, 217, 317, 517, 617, 717) umfasst, die sich mindestens entlang einen Abschnitt einer Längsachse des Befestigungselements (10, 110, 210, 310, 510, 610, 710) erstreckt.

3. Bremssystem nach Anspruch 1 oder Anspruch 2, wobei das Befestigungselement (10, 110, 210, 310, 510, 610, 710) ein mechanisches Verbindungsmittel zum Eingriff mit dem Aktor (14, 114, 314, 414) umfasst und das mechanische Verbindungsmittel einen Gewindeabschnitt (22, 122, 222, 322, 522, 622) umfasst, der mit einer entsprechend mit Gewinde versehenen Einlassöffnung des Aktors (14, 114, 314, 414) in Eingriff bringbar ist.

4. Bremssystem nach Anspruch 3, wobei das Befestigungselement (10, 110, 210, 310, 510, 610, 710) einen im Allgemeinen zylindrischen Schaft (18, 118, 218, 318, 718) mit einem ersten Ende (18a, 118a, 218a, 318a, 718a) und einem zweiten Ende (18b, 118b, 218b, 318b, 718b) umfasst.

5. Bremssystem nach Anspruch 4, wobei das Befestigungselement (10, 110, 210, 310, 510, 610, 710) eine Schraube ist, die einen Kopf (16, 116, 216, 316) umfasst, der sich am ersten Ende des Schafts befindet, oder eine Mutter umfasst, die am ersten Ende (18a, 118a, 218a, 318a, 718a) des Schafts (18, 118, 218, 318, 718) montiert ist.

6. Bremssystem nach Anspruch 4, wobei sich der Gewindeabschnitt (22, 122, 222, 322, 522, 622) am zweiten Ende (18b, 118b, 218b, 318b, 718b), auf einer Außenfläche des Schafts (18, 118, 218, 318, 718), befindet.

7. Bremssystem nach Anspruch 4, wobei der Schaft (18, 118, 218, 318, 718) des Befestigungselements (10, 110, 210, 310, 510, 610, 710) in einer im Allgemeinen zylindrischen Hülse (40, 140, 240) aufnehmbar ist und die Hülse (40, 140, 240) zwischen der Mutter oder dem Kopf (16, 116, 216, 316) des Befestigungselements (10, 110, 210, 310, 510, 610, 710) und dem Aktor (14, 114, 314, 414) geklemmt wird, wenn sich der Gewindeabschnitt (22, 122, 222, 322, 522, 622) mit dem Aktor (14, 114, 314, 414) in Eingriff befindet.

8. Bremssystem nach einem beliebigen der Ansprüche 4 bis 7, falls von Anspruch 2 abhängig, wobei sich die Längsbohrung (17, 117, 217, 317, 517, 617, 717) vom zweiten Ende (18b, 118b, 218b, 318b, 718b) des Befestigungselements (10, 110, 210, 310, 510, 610, 710) entlang mindestens einen Teil der Längsachse des Befestigungselements (10, 110, 210, 310, 510, 610, 710) erstreckt, sodass Flüssigkeit zwischen dem Hohlraum des Befestigungselements (10, 110, 210, 310, 510, 610, 710) und der Aktoröffnung (30, 130, 230, 330, 331, 430, 431) fließen kann.

9. Bremssystem nach Anspruch 7 oder 8, wobei das Befestigungselement (10, 110, 210, 310, 510, 610, 710) mindestens einen Bund (20a, 120a, 220a, 320a, 420a, 20b, 120b, 220b, 320b, 20c, 120c, 220c, 320c) umfasst, der einen O-Ring (44a, 44b, 44c) trägt, der mit einer Innenfläche der Hülse (40, 140, 240) in Eingriff bringbar ist, und die Außenfläche des Schafts (18, 118, 218, 318, 718) und die Innenfläche der Hülse (40, 140, 240) mindestens einen im Wesentlichen ringförmigen Raum (48, 50,148, 150, 240) bilden.

10. Bremssystem nach Anspruch 9, falls von Anspruch 5 abhängig, wobei das Befestigungselement (10, 110, 210, 310, 510, 610, 710) mindestens eine seitliche Bohrung (34, 36, 234, 236, 334) umfasst, die eine Flüssigkeitsverbindung mit der ersten Längsbohrung (17, 117, 217, 317, 517, 617, 717) und mit dem ringförmigen Raum (48, 50, 148, 150, 240) ermöglicht und somit den Flüssigkeitsfluss zwischen dem ringförmigen Raum (48, 50, 148, 150, 240) und der Öffnung (30, 130, 230, 330, 331, 430, 431) des Aktors (14, 114, 314, 414) gestattet.

11. Bremssystem nach einem beliebigen der vorhergehenden Ansprüche, wobei das Bremssystem erste und zweite Befestigungselemente aufweist, wobei das erste Befestigungselement (210) mit dem Aktor einer Federbremse in Eingriff steht und Flüssigkeitsübertragung zwischen der Druckflüssigkeitsquelle und dem Federbremsen-Aktor durch die Längsbohrung (217) des Befestigungselements (210) ermöglicht und das zweite Befestigungselement (110, 310) mit dem Aktor einer Betriebsbremse in Eingriff steht und Flüssigkeitsübertragung zwischen der Druckflüssigkeitsquelle und dem Betriebsbremsen-Aktor ermöglicht.

12. Bremssystem nach einem beliebigen der vorhergehenden Ansprüche, wobei das Befestigungselement (10, 110, 310) ein Mittel zur Trennung von zwei oder mehr Flüssigkeitsströmen durch das Befestigungselement umfasst und die Flüssigkeitsströme verschiedene Drücke aufweisen.

13. Bremssystem nach Anspruch 12, wobei das Trennungsmittel eine zweite Längsbohrung (19) umfasst, die sich entlang einen weiteren Abschnitt der Längsachse des Befestigungselements (10) erstreckt, im Wesentlichen axial mit der ersten Längsbohrung (17) ausgerichtet.

14. Bremssystem nach Anspruch 12, wobei das Befestigungselement (10) eine zweite seitliche Bohrung (36) umfasst, die eine Flüssigkeitsverbindung mit der zweiten Längsbohrung (119) ermöglicht, und das Trennungsmittel einen sich radial nach außen erstreckenden Bund (20d, 20e) zur Abstützung eines O-Rings (44c) umfasst, der mit der Innenwand der Hülse (40) in Eingriff stehen kann, um den ringförmigen Raum in mindestens zwei ringförmige Räume (48, 50) aufzuteilen.

15. Bremssystem nach Anspruch 14, wobei die erste seitliche Bohrung (34), und somit die erste Längsbohrung (17), eine Flüssigkeitsverbindung mit einem ersten ringförmigen Raum (48) ermöglicht und die zweite seitliche Bohrung (36), und somit die zweite Längsbohrung (19), eine Flüssigkeitsverbindung mit dem zweiten ringförmigen Raum (50) ermöglicht.

## Revendications

1. Système de freinage comprenant une source de fluide sous pression, un actionneur (14, 114, 314, 414), et une attache (10, 110, 210, 310, 510, 610, 710) pour assujettir la source de fluide sous pression à l'actionneur, l'attache (10, 110, 210, 310, 510, 610, 710) comprenant une partie sensiblement creuse pour permettre une communication fluidique entre l'actionneur (14, 114, 314, 414) et la source de fluide sous pression, **caractérisé par le fait que** la source de fluide sous pression est un modulateur (12,112, 312, 412, 512, 612).

2. Système de freinage conforme à la revendication 1, où la partie creuse comprend un premier alésage longitudinal (17, 117, 217, 317, 517, 617, 717) qui s'étend au moins le long d'une partie d'un axe longitudinal de l'attache (10, 110, 210, 310, 510, 610, 710).

3. Système de freinage conforme à la revendication 1 ou la revendication 2, où l'attache (10, 110, 210, 310, 510, 610, 710) comprend un moyen de connexion mécanique pour s'enclencher sur l'actionneur (14, 114, 314, 414), le moyen de connexion mécanique comprenant une partie filetée (22, 122, 222, 322, 522, 622) qui peut entrer en prise avec un orifice fileté correspondant de l'actionneur (14, 114, 314, 414).

4. Système de freinage conforme à la revendication 3, où l'attache (10, 110, 210, 310, 510, 610, 710) comprend une tige généralement cylindrique (18, 118, 218, 318, 718) dotée d'une première extrémité (18a, 118a, 218a, 318a, 718a) et d'une deuxième extrémité (18b, 118b, 218b, 318b, 718b).

5. Système de freinage conforme à la revendication 4, où l'attache (10, 110, 210, 310, 510, 610, 710) est un boulon comprenant une tête (16, 116, 216, 316) située à la première extrémité de la tige, ou qui comprend un écrou monté sur la première extrémité (18a, 118a, 218a, 318a, 718a) de la tige (18, 118, 218, 318, 718).

6. Système de freinage conforme à la revendication 4, où la partie filetée (22, 122, 222, 322, 522, 622) est située à la deuxième extrémité (18b, 118b, 218b, 318b, 718b), sur une surface extérieure de la tige (18,118, 218, 318, 718).

7. Système de freinage conforme à la revendication 4, où la tige (18, 118,218, 318, 718) de l'attache (10, 110, 210, 310, 510, 610, 710) peut être reçue dans un manchon généralement cylindrique (40, 140, 240), et où le manchon (40, 140, 240) est serré entre l'écrou ou la tête (16, 116, 216, 316) de l'attache (10. 110, 210, 310, 510, 610, 710) et l'actionneur (14, 114, 314, 414), quand la partie filetée (22, 122, 222, 322, 522, 622) est en prise avec l'actionneur (14, 114, 314, 414).

8. Système de freinage conforme à une quelconque des revendications 4 à 7 quand elles dépendent de la revendication 2, où l'alésage longitudinal (17, 117, 217, 317, 517, 617, 717) s'étend depuis la deuxième extrémité (18b, 118b, 218b, 318b, 718b) de l'attache (10, 110, 210, 310, 510, 610, 710) le long d'au moins une partie de l'axe longitudinal de l'attache (10, 110, 210, 310, 510, 610, 710), de manière à ce que le fluide puisse s'écouler entre le creux de l'attache (10, 110, 210, 310, 510, 610, 710) et l'orifice de l'actionneur (30, 130, 230, 330, 331, 430, 431).

9. Système de freinage conforme à la revendication 7 ou 8, où l'attache (10, 110, 210, 310, 510, 610, 710) comprend au moins un collier (20a, 120a, 220a, 320a, 420a, 20b, 120b, 220b, 320b, 20c, 120c, 220c, 320c) qui soutient un joint torique (44a, 44b, 44c) pouvant être mis en prise avec une surface intérieure du manchon (40, 140, 240) et où la surface extérieure de la tige (18, 118, 218, 318, 718) et la surface intérieure du manchon (40, 140, 240) forment au moins un espace sensiblement annulaire (48, 50,148, 150, 240).

10. Système de freinage conforme à la revendication 9, quand elle dépend de la revendication 5, où l'attache (10, 110, 210, 310, 510, 610, 710) comprend au moins un alésage latéral (34, 36, 234, 236, 334) pouvant être en communication fluidique avec le premier alésage longitudinal (17, 117, 217, 317, 517, 617, 717) et avec l'espace annulaire (48, 50, 148, 150, 240), ce qui permet au fluide de s'écouler entre l'espace annulaire (48, 50, 148, 150, 240) et l'orifice (30, 130, 230, 330, 331, 430, 431) de l'actionneur (14, 114, 314, 414).

11. Système de freinage conforme à une quelconque des revendications précédentes, le système de freinage étant doté d'une première et d'une deuxième attaches, où la première attache (210) est mise en prise avec l'actionneur d'un frein à ressort, et permet une communication fluidique entre la source de fluide sous pression et l'actionneur du frein à ressort, à travers l'alésage longitudinal (217) de l'attache (210), et où la deuxième attache (110, 310) est mise en prise avec l'actionneur d'un frein de service, et permet une communication fluidique entre la source de fluide sous pression et l'actionneur du frein de service.

12. Système de freinage conforme à une quelconque des revendications précédentes, où l'attache (10, 110, 310) comprend un moyen de séparation de deux écoulements fluidiques ou plus à travers l'attache, les écoulements des fluides ayant des pressions différentes.

13. Système de freinage conforme à la revendication 12, où le moyen de séparation comprend un deuxième alésage longitudinal (19) qui s'étend le long d'une autre partie de l'axe longitudinal de l'attache (10), aligné sensiblement axialement avec le premier alésage longitudinal (17).

14. Système de freinage conforme à la revendication 12, où l'attache (10) comprend un deuxième alésage latéral (36) qui peut être en communication fluidique avec le deuxième alésage longitudinal (119), et où le moyen de séparation comprend un collier s'étendant radialement vers l'extérieur (20d, 20e) pour soutenir un joint torique (44c) qui peut être mis en prise avec la paroi interne du manchon (40), pour séparer l'espace annulaire en au moins deux espaces annulaires (48, 50).

15. Système de freinage conforme à la revendication 14, où le premier alésage latéral (34), et par conséquent le premier alésage longitudinal (17), peuvent être en communication fluidique avec un premier espace annulaire (48), et où le deuxième alésage latéral (36), par conséquent le deuxième alésage longitudinal (19) peuvent être en communication fluidique avec le deuxième espace annulaire (50).
